# EUROPÄISCHE PATENTSCHRIFT

(11) **EP 2 527 868 B1**
(45) Veröffentlichungstag und Bekanntmachung des Hinweises auf die Patenterteilung: **24.04.2013**
(21) Anmeldenummer: 11167981.7
(22) Anmeldetag: 27.05.2011
(51) Int. Cl.: G01S 7/497, G05B 23/02

(54) **Entfernungsmessender optoelektronischer Sicherheitssensor zur Überwachung eines Überwachungsbereichs**
Optoelectronic security sensor to measure distance for monitoring a surveillance area
Capteur de sécurité optoélectronique mesurant l'éloignement pour la surveillance d'une zone de surveillance

(43) Veröffentlichungstag der Anmeldung: 28.11.2012
(73) Patentinhaber: SICK AG, 79183 Waldkirch (DE)
(72) Erfinder: Haberer, Manfred, 79359 Riegel (DE); Hammes, Markus Dr., 79104 Freiburg (DE)
(74) Vertreter: Hehl, Ulrich

(56) Entgegenhaltungen:
- DE-A1- 10 153 427
- DE-U1-202009 004 397
- US-A1- 2008 303 661
- US-A1- 2009 070 387

## Beschreibung

Die Erfindung betrifft einen entfernungsmessenden optoelektronischen Sicherheitssensor sowie ein Verfahren zur Überwachung eines Überwachungsbereichs nach dem Oberbegriff von Anspruch 1 beziehungsweise 14.

Eine wichtige sicherheitstechnische Anwendung von optoelektronischen Sensoren ist die Absicherung von Maschinen, die eine Gefahrenquelle bilden. Der Sensor überwacht dabei ein vom Anwender konfigurierbares Schutzfeld oder Schutzvolumen, das während des Betriebs der Maschine von Bedienpersonal nicht betreten werden darf. Erkennt der Sensor einen unzulässigen Schutzfeldeingriff, etwa ein Bein einer Bedienperson, so löst er einen Nothalt der Maschine aus. Andere Eingriffe in das Schutzfeld, beispielsweise durch statische Anlagenteile oder wiederkehrende maschinelle Bewegungen, können vorab als zulässig eingelernt werden.

Einige dieser Sensoren sind entfernungsmessend, erkennen also nicht nur Objekte an sich, sondern auch deren Abstand. Zu diesen Sensoren zählt ein Sicherheitslaserscanner, wie beispielsweise in der DE 43 40 756 A1 beschrieben. Ein von einem Laser erzeugter Lichtstrahl überstreicht mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren, wie sie für Laserscanner in der Sicherheitstechnik bevorzugt eingesetzt werden, misst der Laserscanner die Laufzeit, bis ein ausgesandter Lichtpuls wieder empfangen wird. Da der Laserscanner Winkel- und Entfernungsinformationen gewinnt, können zweidimensionale Positionen von Objekten in dem Überwachungsbereich ermittelt werden.

Eine andere Beispielgruppe sind 3D-Kameras, die in unterschiedlichen Technologien bekannt sind. Ein stereoskopisches Kamerasystem nimmt zwei oder mehr Bilder einer Szenerie aus unterschiedlichem Blickwinkel auf, ordnet Strukturen der verschiedenen Bilder einander zu und trianguliert aus der Disparität, also dem scheinbaren Versatz der Strukturen, und auf Basis der bekannten Perspektiven deren Entfernung. Bei einer Laufzeitkamera wird aktiv ein Lichtsignal ausgesandt und für jeden Pixel beispielsweise mittels Photonmischdetektion die Laufzeit bis zum Empfang des aus der Szenerie remittierten Lichts bestimmt. Wegen der bekannten und konstanten Lichtgeschwindigkeit liefert auch dies eine dreidimensionale Entfernungskarte. Es sind Bildsensoren bekannt, in deren intelligenten Pixel die Laufzeitbestimmung integriert ist.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung und/oder Vorsehen von einzelnen Testzielen mit definierten Reflexionsgraden, die unter den entsprechenden Scanwinkeln erkannt werden müssen.

Es gelingt mit derartigen Sensoren nicht immer eindeutig zu entscheiden, ob ein erfasstes Objekt tatsächlich eine Gefährdung bedeutet. Insbesondere kann nicht zuverlässig erkannt werden, ob sich ein Eingriff auf eine Person zurückführen lässt. Der Sensor wird in Zweifelssituationen stets sicherheitsgerichtet abschalten, um die Gesundheit der Bedienpersonen nicht zu gefährden. Das wiederum wirkt sich auf die Verfügbarkeit des System aus, denn Fehlabschaltungen führen zu Maschinenstillständen und Produktivitätseinbußen. Die Verfügbarkeit lässt sich durch Maßnahmen wie Mindestgrößen eingreifender Objekte, eine Mindestdauer eines gefährlichen Eingriffs oder angepasste Konfiguration der Schutzfelder erhöhen. Dabei kann eine Analyse der Fehlabschaltungen hilfreich sein. Dies muss aber manuell durch den Anlagenbetreiber oder das Wartungspersonal erfolgen, erfordert vertiefte sicherheitstechnische Kenntnisse und ist überdies sehr zeitaufwändig.

Es sind Sicherheitslaserscanner bekannt, welche die Möglichkeit bieten, die Daten einer Schutzfeldverletzung für Diagnosezwecke auszugeben. Das Wartungspersonal hat somit die Möglichkeit, diese Abschaltinformationen mit Hilfe eines Diagnosetools auf einem externen Rechner mit entsprechender Diagnosesoftware auszulesen. Alternativ wird das Diagnosetool während des Betriebs angeschlossen, um die Sensordaten über einen längeren Zeitraum online grafisch darzustellen und zu beobachten, um so die Abschaltungsvorgänge visuell zu analysieren.

Diese Datenbasis genügt nicht für eine umfassende Analyse. Es stehen nicht genügend Daten über die Abschaltereignisse bereit, und der zeitliche Ablauf bleibt nicht erhalten. Wird ein Sicherheitssensor an einem kooperativen Arbeitsplatz eingesetzt, so werden Fehlabschaltungen von prozessbedingten Abschaltungen überschrieben. Dadurch gehen die benötigten Diagnoseinformationen sogar gänzlich verloren.

Zudem wird die Interpretation der Daten vollständig auf den Anwender abgewälzt. Für den Betreiber der Anlage, der in der Regel nur begrenztes Wissen über die Systemeigenschaften des eingesetzten Sensors verfügt, ist eine Interpretation der Sensordaten im Hinblick auf die Abschaltursache mangels Expertenwissen nicht möglich.

Für sehr selten, beispielsweise nur dreimal pro Schicht, auftretende Ereignisse wird die Untersuchung außerdem sehr zeitaufwändig. Nicht selten lassen sich die genauen Umstände einer Schutzfeldverletzung dadurch nicht mehr rekonstruieren.

Insgesamt fehlt es sowohl an Informationen als auch an deren Aufbereitung, um Betriebsparameter, wie die Mindestdauer und Mindestgröße eines unzulässigen Eingriffs oder die Geometrie der Schutzfelder, für eine größtmögliche Verfügbarkeit bei weiterhin voller Sicherheit einzustellen.

Für kamerabasierte Sensoren ist bekannt, den Videostrom ständig oder zumindest ausschnittweise während eines Abschaltereignisses zu speichern. Dies erfordert große Speicherkapazitäten, und selbst wenn diese bereitgestellt werden, muss die Interpretation dennoch durch den Anwender erfolgen. Zudem ist die Aufnahme von Szenen, in denen Personen erkannt werden, aus arbeitsrechtlichen Gesichtspunkten umstritten.

Die DE 20 2009 004 397 U1 offenbart einen Sicherheits-Laserscanner mit einem explosionsgeschützt ausgeführten äußeren Gehäuse. Der Laserscanner überprüft seine Detektionsfähigkeit anhand der Intensität von Empfangslicht, das an einer Referenzkontur remittiert wurde.

Aus der US 2009/0070387 A1 ist ein System zur automatischen Speicherung von ereignisbasierten Daten bekannt. Das System besitzt einen rollierenden Kurzzeitspeicher und einen Langzeitspeicher jeweils zur Sicherung von Ereignissen. Wegen schlechter Zugänglichkeit, beispielsweise in einem Nuklearreaktor oder Unterwasser, ist der Zugang zu dem Speicher nicht oft genug möglich, als dass der Kurzzeitspeicher mit seiner begrenzten Kapazität sämtliche zwischenzeitlichen Ereignisse fassen könnte. Deshalb werden hierarchisch besonders wichtige Ereignisse definiert und entsprechend priorisiert von dem Kurzzeitspeicher in den Langzeitspeicher umgeschichtet. In dem Langzeitspeicher stehen somit immer die wichtigsten Ereignisse seit dem letzten Auslesen zur Verfügung.

In der US 2008/030661A1 wird ein kompaktes, eigenständiges Sicherheitssystem beschrieben, welches einen Eindringling erkennt und daraufhin einen Alarm ausgibt. Dabei ist eine Ersatzbatterie vorgesehen, um auch bei Ausfall der primären Energiequelle die Überwachungsfunktion und die Alarmausgabe zu ermöglichen. Weiterhin kann das Sicherheitssystem einen nichtflüchtigen Speicher umfassen, um sicherheitsbezogene Ereignisse zu speichern.

Es ist daher Aufgabe der Erfindung, die Analyse von Fehlabschaltungen für den Anwender zu vereinfachen.

Diese Aufgabe wird durch einen entfernungsmessenden optoelektronischen Sicherheitssensor sowie ein Verfahren zur Überwachung eines Überwachungsbereichs gemäß Anspruch 1 beziehungsweise 14 gelöst. Dabei geht die Erfindung von dem Grundgedanken aus, die Informationen über die Abschaltereignisse in einer Historie zu speichern, um sie später gebündelt und je nach Bedarf umfassend analysieren zu können. Diese Analyse findet im Gegensatz zum Stand der Technik nicht durch einen Experten mit einem Diagnoserechner statt, sondern in einer Diagnoseeinheit, die Teil des Sensors oder beispielsweise Teil einer Sicherheitssteuerung ist, an welche der Sensor für die Verarbeitung der sicherheitsgerichteten Abschaltsignale angeschlossen ist. Bei der automatischen Analyse werden Abschaltereignisse klassifiziert und derart aufbereitet verfügbar gemacht. Anstelle der nur mit Expertenwissen auswertbaren Rohdaten erhält der Anwender so übersichtliche Klasseninformationen über die Abschaltereignisse, die rasch Aufschluss über die Ursachen von als zu häufig angesehenen Fehlschaltungen geben.

Die Erfindung hat den Vorteil, dass die Abschaltereignisse direkt erfasst, analysiert und bewertet werden, woraufhin eine Klassifikation der Fehlschaltungen vorliegt. Ein Diagnosetool wird nicht mehr zwingend benötigt und dient allenfalls noch als Anzeigemittel, um die aufbereiteten Daten auszulesen und darzustellen und die empfohlenen Abhilfemaßnahmen zu präsentieren. Für den Anwender entfällt die zeitaufwändige und mangels Expertenwissen oft unlösbare Analyse der Sensordaten, um Fehlerursachen beziehungsweise geeignete Gegenmaßnahmen ungewollter Maschinenstillstände aufzufinden. Informationen über Störquellen und die Robustheit des Systems werden jederzeit von dem Sensor bereitgestellt.

Die Objekteingriffsinformationen umfassen bevorzugt die Position des unzulässigen Objekteingriffs. Die Abschaltung beinhaltet lediglich die binäre Ortsinformation, dass ein Objekt in dem Schutzbereich erfasst wurde. Der Sicherheitssensor kann diese Position aber wesentlich genauer auflösen, und diese zusätzliche Information ist bei der Diagnose von Fehlabschaltungen sehr nützlich.

Die Diagnoseeinheit unterscheidet bevorzugt mindestens eine der folgenden Klassen von Abschaltereignissen anhand der Position: einen Objekteingriff in einen Randbereich des Schutzbereichs, einen Objekteingriff innerhalb des Schutzbereichs oder einen Objekteingriff im Nahbereich des Sicherheitssensors. Unter Randbereich wird hier in erster Linie ein streifender Eingriff verstanden. Tritt dies häufiger auf, so kann man vermuten, dass eine Anpassung der Schutzfeldgeometrie ohne Sicherheitseinbußen möglich ist und die Fehlabschaltungen deutlich reduziert. Objekteingriffe innerhalb des Schutzbereichs werden oft von Staub oder herunterfallenden Teilen verursacht. Im Nahbereich des Sensors könnte eine Verschmutzung der Frontscheibe die Fehlabschaltung bewirkt haben.

Die Objekteingriffsinformationen umfassen bevorzugt eine geometrische Ausdehnung eines Teilbereichs des Schutzbereichs, in den der unzulässige Objekteingriff bei dem Abschaltereignis erfolgt. Damit wird also die Objektgröße eines die Abschaltung verursachenden Objekts erfasst. Die Diagnoseeinheit unterscheidet hier insbesondere anhand der geometrischen Ausdehnung ein kleines Störobjekt und ein größeres Objekt als Klassen von Abschaltereignissen. Ein kleines Störobjekt ist beispielsweise ein Objekt oder ein Staubteilchen, und Abschaltungen durch Störobjekte können durch Heraufsetzen der Mindestgröße unzulässiger Objekte reduziert werden. Größere Objekte dagegen sind Werkzeuge, Maschinen oder Körperteile, bei denen ein sicherheitsgerichtetes Abschalten zumindest hinsichtlich des Kriteriums der geometrischen Ausdehnung keine Fehlschaltung ist.

Die Objekteingriffsinformationen umfassen bevorzugt eine Dauer des unzulässigen Objekteingriffs. Ein sicherheitsrelevanter Objekteingriff liegt üblicherweise über eine gewisse Zeitspanne in der Größenordnung von Sekunden vor, zumal die Schutzfeldgeometrie meist mit einem Sicherheitsaufschlag konfiguriert wird, so dass es für Körperteile innerhalb von Sekundenbruchteilen gar nicht möglich ist, bis zur Gefahrenquelle vorzudringen. Die Diagnoseeinheit unterscheidet insbesondere anhand der Dauer einen kurzzeitigen Objekteingriff und einen anhaltenden Objekteingriff als Klassen von Abschaltereignissen. Kurzzeitige Eingriffe sind beispielsweise Staubteilchen, Lichtreflexe oder sonstige Fehldetektionen. Durch Konfigurieren einer Mindestdauer von sicherheitskritischen Objekteingriffen können derartige Fehlschaltungen unterdrückt werden.

Die Objekteingriffsinformationen umfassen bevorzugt einen Zeitpunkt des unzulässigen Objekteingriffs. Es ist denkbar, dass manche nicht sicherheitskritische Störungen zu bestimmten Zeitpunkten auftreten, etwa abhängig vom Sonnenstand oder dem Betrieb anderer Einrichtungen. Sind diese Zeitpunkte bekannt, so lässt sich die Ursache deutlich beschleunigt auffinden und womöglich beseitigen.

Die Objekteingriffsinformationen umfassen bevorzugt eine Intensität des Messwerts bei Erkennung des unzulässigen Objekteingriffs. Dadurch wird beispielsweise ein Blenden des Sensors an einer bestimmten Position erkannt. Das deutet auf eine Fremdlichtquelle oder eine Spiegelfläche in einem bestimmten Erfassungswinkel hin.

Die Diagnoseeinheit ist bevorzugt für eine statistische Auswertung der klassifizierten Abschaltereignisse ausgebildet, insbesondere eine Ausgabe der Häufigkeit des Auftretens, der Zeitpunkte und der Erfassungsrichtung von Abschaltereignissen nach Klassen. Besonders lohnend ist natürlich, den häufigsten Abschaltereignissen nachzugehen und nicht einzelnen Ausreißern. Durch statistische Auswertung werden aussichtsreiche Maßnahmen für eine verbesserte Verfügbarkeit rasch identifiziert. Ähnliche Hinweise zum schnellen Einkreisen der möglichen Maßnahmen gibt eine statistische Auswertung der Zeitpunkte oder der Erfassungsrichtung beziehungsweise Position von Abschaltereignissen.

Die Diagnoseeinheit ist bevorzugt dafür ausgebildet, anhand der Klassifikation mindestens eine wahrscheinlichste Ursache und/oder mindestens eine unwahrscheinlichste Ursache für ein Abschaltereignis auszugeben. Sind die Abschaltereignisse klassifiziert, so liefert ein geeigneter Klassifikator auch entsprechende Wahrscheinlichkeiten mit. Durch feste oder intelligente Verknüpfung, beispielsweise über ein Expertensystem, können den Klassen Maßnahmen zur Abhilfe zugeordnet werden. Der Anwender erhält also nicht nur Informationen über die Fehlerquellen, sondern zugleich einen nach wahrscheinlicher Wirksamkeit geordneten Katalog von Maßnahmen, wie die Fehlerquellen beseitigt werden könnten.

Die Diagnoseeinheit ist bevorzugt dafür ausgebildet, ein örtliches Histogramm und/oder ein zeitliches Histogramm von unzulässigen Objekteingriffen auszugeben. Besonders schnell erfassbar ist ein solches Histogramm in einer grafischen Darstellung. Dadurch lassen sich Ursachen für Fehlabschaltungen in örtlicher oder zeitlicher Beziehung einkreisen.

Die Diagnoseeinheit ist bevorzugt dafür ausgebildet, das örtliche und/oder zeitliche Auftreten von Abschaltereignissen zu korrelieren. Damit wird festgestellt, ob eine Systematik in den Abschaltereignissen zu erkennen ist. Ist dies nicht der Fall, so muss die Ursache von Fehlabschaltungen eher in zufälligen Ereignissen, beispielsweise dem Auftreten von Staubpartikeln gesucht werden. Systematische Fehlerquellen dagegen beruhen auf einem Störer, einer nicht optimalen Anpassung der Schutzfeldgeometrie oder ähnlichem.

Die Auswertungseinheit ist bevorzugt dafür ausgebildet, Messwerte des Sensors in örtlicher und/oder zeitlicher Umgebung eines Abschaltereignisses in dem Speicher abzulegen, wobei die Diagnoseeinheit dafür ausgebildet ist, die Messwerte bei der Klassifizierung einzubeziehen. Dies kann sehr nützlich sein, um das Abschaltereignis besser zu verstehen, und führt daher zu einer genaueren Klassifikation.

Der Sicherheitssensor ist bevorzugt eine 3D-Kamera oder ein entfernungsmessender Sicherheitslaserscanner. Diese Sensoren ermöglichen eine sehr freie und komplexe Konfiguration von Schutzfeldern. Entsprechend gibt es relativ viele Freiheitsgrade, mit denen die Verfügbarkeit beeinflusst werden kann, und damit besteht ein hoher Bedarf an einer genauen, raschen und verständlichen Analyse.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die einzige Abbildung zeigt in:

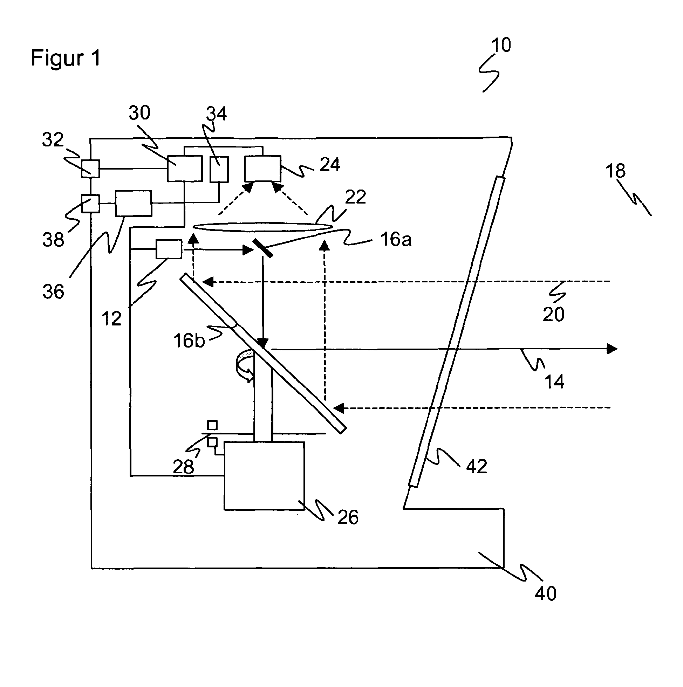

- Fig. 1: eine schematische Schnittdarstellung eines erfindungsgemäßen Sicherheitssensors.

Figur 1 zeigt eine schematische Schnittdarstellung durch einen erfindungsgemäßen Sicherheitslaserscanner 10. Die Erfindung wird an diesem Beispiel beschrieben, umfasst aber auch andere entfernungsmessende optoelektronische Sicherheitssensoren einschließlich den in der Einleitung kurz beschriebenen 3D-Kameras.

Ein von einem Lichtsender 12, beispielsweise einem Laser, erzeugter Lichtstrahl 14, der einzelne Lichtimpulse aufweist, wird über Lichtablenkeinheiten 16a-b in einen Überwachungsbereich 18 gelenkt und dort von einem gegebenenfalls vorhandenen Objekt remittiert. Das remittierte Licht 20 gelangt wieder zu dem Sicherheitslaserscanner 10 zurück und wird dort über die Ablenkeinheit 16b und mittels einer Empfangsoptik 22 von einem Lichtempfänger 24 detektiert, beispielsweise einer Photodiode.

Die Lichtablenkeinheit 16b ist in der Regel als Drehspiegel ausgestaltet, die durch Antrieb eines Motors 26 kontinuierlich rotiert. Die jeweilige Winkelstellung der Lichtablenkeinheit 16b wird über einen Encoder 28 erfasst. Der von dem Lichtsender 12 erzeugte Lichtstrahl 14 überstreicht somit den durch die Rotationsbewegung erzeugten Überwachungsbereich 18. Wird ein von dem Lichtempfänger 24 empfangenes reflektiertes Lichtsignal 20 aus dem Überwachungsbereich 18 empfangen, so kann aus der Winkelstellung der Ablenkeinheit 16b mittels des Encoders 28 auf die Winkellage des Objektes in dem Überwachungsbereich 18 geschlossen werden.

Zusätzlich wird die Laufzeit der einzelnen Laserlichtpulse von ihrem Aussenden bis zu dem Empfang nach Reflexion an dem Objekt in dem Überwachungsbereich 18 ermittelt. Aus der Lichtlaufzeit wird unter Verwendung der Lichtgeschwindigkeit auf die Entfernung des Objektes von dem Sicherheitslaserscanner 10 geschlossen. Diese Auswertung erfolgt in einer Auswerteeinheit 30, die dafür mit dem Lichtsender 12, dem Lichtempfänger 24, dem Motor 26 und dem Encoder 28 verbunden ist. Somit stehen über den Winkel und die Entfernung zweidimensionale Polarkoordinaten aller Objekte in dem Überwachungsbereich 18 zur Verfügung.

Die Auswertungseinheit 30 überwacht Schutzfelder innerhalb des Überwachungsbereichs 18, deren Geometrien vor dem Betrieb beispielsweise durch eine grafische Konfiguration festgelegt wurden, auf unzulässige Objekteingriffe. Dabei wird nicht jeder Eingriff in das Schutzfeld als unzulässig und damit sicherheitskritisch bewertet. Beispielsweise können bestimmte Objektgeometrien oder Bewegungsmuster vorab als zulässig eingelernt werden. Weiterhin ist denkbar, eine Mindestgröße festzulegen, unterhalb derer ein Eingriff lediglich als Störung gewertet wird. Ähnlich wird auch häufig eine Mindestdauer definiert, über die ein Objekteingriff erfasst sein muss, ehe dies als sicherheitsrelevant angesehen wird. Dabei wird beispielsweise ein Objekteingriff während einer oder mehrerer Abtastperioden noch toleriert, da dies bei üblichen Rotationsperioden der Ablenkeinheit 16a-b allenfalls wenigen hundert Millisekunden entspricht. Wird ein sicherheitskritischer Eingriff erkannt, so gibt die Auswertungseinheit 30 über einen Sicherheitsausgang 32 (OSSD, Output Signal Switching Device) ein Absicherungssignal an eine überwachte Gefahrenquelle, beispielsweise eine Maschine. Immer wenn ein solches Abschaltereignis auftritt, werden relevante Sensordaten oder Auswertungen der Sensordaten in einem Speicher 34 abgelegt, um später analysieren zu können, ob es sich um eine Fehlabschaltung gehandelt hat und welche Ursache der Fehlabschaltung zugrunde liegen könnte.

Eine Diagnoseeinheit 36 greift auf diesen Speicher 34 zu, um die aufgezeichneten Abschaltereignisse zu analysieren. Dies geschieht auf eine Anforderung des Anwenders hin oder beispielsweise bei Anschluss eines Diagnoserechners an einen Diagnoseausgang 38 des Sicherheitssensors 10. Alle genannten Funktionskomponenten sind in einem Gehäuse 40 angeordnet, das frontseitig, also im Bereich des Lichtaus- und Lichteintritts, eine Frontscheibe 42 aufweist. Speicher 34 und Diagnoseeinheit 36 können alternativ auch außerhalb des Sicherheitssensors 10 untergebracht werden, beispielsweise in einer Sicherheitssteuerung, an welche der Sicherheitssensor 10 angeschlossen ist und welche die Abschaltbefehle verarbeitet beziehungsweise an die zu überwachenden Maschinen weiterleitet.

Bei der Analyse der in dem Speicher 34 abgelegten Abschaltereignisse werden von der Diagnoseeinheit 36 eine Reihe von Kriterien herangezogen, um die Ursachen von Fehlabschaltungen zu identifizieren. Den Kriterien liegen Parameter zugrunde, die in den Sensordaten enthalten sind oder aus den Sensordaten gewonnen werden. Diese Kriterien oder Parameter können einzeln oder in beliebigen Kombinationen angewandt werden.

Als Ergebnis dieser Analyse sind die Abschaltereignisse anhand der Kriterien und Parameter klassifiziert. Bereits die Klassifikation gibt wichtige Hinweise, wie die Fehlabschaltung verursacht wurde, beispielsweise wenn festgestellt ist, dass eine Abschaltung durch ein sehr kleines Objekt verursacht wurde. Durch Verknüpfung der Klasse mit einem Maßnahmenkatalog können überdies Vorschläge unterbreitet werden, wie die Fehlabschaltung zukünftig vermieden werden kann. Im genannten Beispiel könnte Abhilfe schaffen, dass die Mindestobjektgröße heraufgesetzt wird. Solche Maßnahmen sind selbstverständlich immer nur in dem Rahmen möglich, in dem die Sicherheitsfunktion nicht beeinträchtigt wird. Dazu bietet der Sicherheitssensor 10 vorzugsweise gar nicht erst die Möglichkeit, Parameter in einem sicherheitskritischen Bereich zu setzen, beispielsweise auf eine Mindestgröße, die auch einen Finger unentdeckt ließe. Derartige Regeln, ob ein Parameter sicherheitskritisch ist, hängen aber auch von der Anwendung ab.

Für die Klassifikation von Abschaltereignissen nutzt die Diagnoseeinheit 36 verschiedene Parameter, wobei eine beliebige Auswahl oder Verknüpfung dieser Parameter und auch weiterer, hier nicht diskutierter Parameter verwendet werden kann. Als Parameter kommen beispielsweise in Betracht: Die Position des Objekts beim Auslösen des Abschaltereignisses, geometrische Ausdehnung des Teilbereichs des Schutzbereichs, in welchen der Objekteingriff erfolgt, die Aufenthaltsdauer des Objekts in dem Schutzbereich, der Zeitpunkt des Eingriffs oder die Intensität der Messwerte, anhand derer das Abschaltereignis erkannt wird.

Demnach ist eine Gruppe von Klassifizierungsmerkmalen durch die Position des Objekts in dem Schutzbereich bestimmt. Das gilt insbesondere im Zusammenhang mit sporadischen, kurzzeitigen Eingriffen. Treten Abschaltungen auf, bei denen sich die Objekte in einem Randbereich des Schutzbereichs befinden, ist dies ein Klassifizierungsmerkmal für eine falsche Dimensionierung der Schutzfeldgeometrie. Ein weiteres Merkmal dieses Konfigurationsfehlers ist die regelmäßige Wiederholung solcher sporadischer Schutzfeldverletzungen am Schutzfeldrand. Dies deutet auf einen systematischen Fehler bei der Schutzfeldkonfiguration hin. Dabei ist natürlich zu erwarten, dass ein Schutzfeldeingriff am Rand beginnt. Hier wird also in erster Linie auf solche Abschaltereignisse Bezug genommen, bei denen das Objekt auch nach dem Abschaltereignis nicht tiefer in das Schutzfeld eindringt.

Befindet sich andererseits das Objekt bei einem Abschaltereignis innerhalb des Schutzbereichs, also nicht in einem Randbereich und ohne zuvor auch nur kurzzeitig in einem Randbereich des Schutzbereichs registriert worden zu sein, so ist dies ein Klassifizierungsmerkmal für Staub oder herabfallende Teile, die von oben in den Schutzbereich eindringen. Ansonsten würden solche Objekte zuerst zumindest kurzzeitig in einem Randbereich registriert.

Ein Objekt im Nahfeld des Sensors, also unmittelbar vor dem Sicherheitsscanner 10 bei minimalen Entfernungen, ist ein Klassifizierungsmerkmal für eine Verschmutzung der Frontscheibe 42. Wegen der Perspektive reichen für ein solches Abschaltereignis bereits relativ kleine Staubteilchen aus.

Eine weitere Gruppe von Klassifizierungsmerkmalen hängt von der geometrischen Ausdehnung des Schutzfeldeingriffs ab. Dabei kann die Kontur des Objekts berücksichtig werden, um eine feinere Klassifizierung zu erreichen. Als einfachstes Unterscheidungskriterium wird lediglich ein kleines und ein größeres Objekt unterschieden. Objekte unterhalb einer gewissen Größe werden als nicht sicherheitskritisch eingestuft. Größere Objekte deuten demnach nicht auf eine Fehlabschaltung, sondern ein korrektes Absichern hin. Wenn andererseits gehäuft Abschaltungen aufgrund von Objekten knapp oberhalb der gewählten Mindestgröße stattfinden, so besteht möglicherweise eine geeignete Abhilfemaßnahme darin, auch etwas größere Objekte noch als unkritisch zu akzeptieren.

Eine weitere Gruppe von Klassifizierungsmerkmalen wird durch die Aufenthaltsdauer im Schutzbereich charakterisiert. Eine solche Dauer wird häufig in Scans angegeben, also Perioden der rotierenden Ablenkeinheit 16 und somit wiederholten Abtastungen des gleichen Ortes. Bei üblichen Drehgeschwindigkeiten entspricht ein Scan einer Größenordnung von 10ms-100ms, beispielsweise 25ms. Damit nicht jede einzelne, sehr kurzzeitige Störung zu einer sicherheitsgerichteten Abschaltung führt, wird für einen unzulässigen Objekteingriff in ein Schutzfeld häufig gefordert, dass dieser wiederholt in mehreren aufeinanderfolgenden Scans registriert wird. Dies beeinträchtigt nicht die sichere Erkennung einer in den Schutzbereich eindringenden Person, deren Aufenthaltsdauer gewöhnlich deutlich länger ist als eine Sekunde. Abschaltungen aufgrund von Staubteilchen oder Fehlkonfigurationen von Schutzfeldern dagegen währen häufig nur wenige Scans, etwa ein bis sechs Scans, und damit kürzer als beispielsweise 200ms. Somit ist die Aufenthaltsdauer des Objekts im Schutzbereich ein Klassifizierungsmerkmal für die Unterscheidung von Fehlschaltungen durch Staub und dem tatsächlichen Eindringen von Werkern in den Schutzbereich.

Die Aufenthaltsdauer von Objekten gibt dem Anwender außerdem eine sehr einfach auszuwertende Information, ob die Filterzeiten, also die Anzahl aufeinanderfolgender Scans einer Mehrfachauswertung mit wiederholter Erfassung des Objekts, mit der Störungen von tatsächlichen Objekteingriffen unterschieden werden, optimal konfiguriert sind. Treten beispielsweise sporadisch Objekte in zwei aufeinanderfolgenden Scans auf, so ist eine Mehrfachauswertung über drei Scans hinsichtlich der Verfügbarkeit möglicherweise noch nicht die beste Wahl.

Auch der Zeitpunkt des Abschaltereignisses kann Klassifizierungsmerkmale liefern. Treten Abschaltungen beispielsweise stets zu bestimmten Tageszeiten auf, so lässt dies Abläufe schließen, die vermutlich verändert oder ausgeblendet werden könnten. Dabei kann es sich um Lichtquellen, aber auch um feste Bewegungsabläufe handeln.

Als letzter der beispielhaft genannten Parameter kann auch die Intensität des Messwerts eine Rolle für die Klassifizierung spielen. Wenn nämlich beispielsweise der Messwert bei einem Abschaltereignis geblendet ist, also ein stark übersteuertes Empfangssignal insbesondere in einer bestimmten Winkelrichtung erzeugt wird, so kann davon ausgegangen werden, dass hier eine störende Fremdlichtquelle auf den Sicherheitsscanner 10 einwirkt.

Zusätzlich zu den aus den genannten und weiteren Parametern abgeleiteten Klassen kann die Diagnoseeinheit 36 vorzugsweise die Abschaltereignisse in Form von örtlichen oder zeitlichen Histogrammen aufbereiten. Mit einer geeigneten visuellen Aufbereitung in einem grafischen Werkzeug, beispielsweise als 3D-Landschaft über der Abtastebene des Sicherheitsscanners 10, kann der Anwender dann sehr schnell die Positionen erfassen, an denen Abschaltereignisse auftreten oder sich sogar häufen. Entsprechendes gilt für eine zeitliche Zuordnung, beispielsweise um Zusammenhänge von Abschaltereignissen zu Tageszeiten oder Wochentagen aufzudecken.

Ein solches Histogramm ist ein Beispiel für eine statistische Aufbereitung der Abschaltereignisse. Die Diagnoseeinheit 36 kann vorzugsweise anstelle einer bloßen Darstellung als Histogramm auch selbständig statistische Auswertungen vornehmen. Dabei werden die Abschaltereignisse oder die klassifizierten Ursachen in Abhängigkeit von den oben genannten oder anderen Parameter statistisch ausgewertet, also beispielsweise ihrer Auftretenshäufigkeit, ihrer Auftretenszeitpunkte, der zugehörigen Scanrichtungen oder der Positionen ihres Auftretens. Damit gewinnt der Anwender Hinweise für die Ursachen und die relative Bedeutung der Schutzfeldeingriffe. Derartige Informationen können von einem, aber auch von mehreren der Parameter abhängen. Ein Beispiel für eine mehrfache Abhängigkeit ist ein Fremdlichtereignis zu einer bestimmten Uhrzeit aus einer bestimmten Richtung, das vermutlich auf einfallendes Sonnenlicht zurückzuführen ist.

In einer Weiterbildung der Erfindung findet auch eine Zeitfolgenanalyse der Messwerte statt. Dazu werden Korrelationen der Abschaltereignisse gebildet, um herauszufinden, ob Systematiken erkennbar sind. Finden Schutzfeldverletzungen örtlich und zeitlich isoliert und miteinander unkorreliert statt, deutet dies auf Probleme mit kleinen Partikeln, wie Staub oder Wasser, beziehungsweise mit Fremdlicht hin. Wenn andererseits die Schutzfeldverletzungen wiederholt derselben Scanrichtung oder Position zugeordnet werden und im Randbereich des Schutzbereichs auftreten, dann kann von einem systematischen Konfigurationsfehler ausgegangen werden, in diesem Falle der Schutzfeldgeometrie.

Es kann vorteilhaft sein, nicht nur das Abschaltereignis selbst, sondern auch ein zeitliches Fenster vor beziehungsweise nach dem Abschaltereignis zu betrachten. Beispielsweise bedarf es nach einem Schutzfeldeingriff in einen Randbereich, bei dem nach der Abschaltung anschließend eine Position des Objekts im Inneren des Schutzbereichs gemessen wird, vermutlich keiner Anpassung der Schutzfeldgeometrie, da dies allem Anschein nach ein korrektes Verhalten des Sicherheitsscanners 10 und keine Fehlabschaltung ist.

Die Ausgabe der Analyse der Diagnoseeinheit 36 erfolgt beispielsweise durch Anzeigen der Histogramme und/oder durch Anzeige der für die Abschaltereignisse ermittelten Klassen. Diese Anzeige erfolgt direkt am Sicherheitsscanner 10 oder in einem angeschlossenen Gerät. Die auftretenden Klassen können schon allein als wichtiger Hinweis auf die Ursache dienen. Alternativ wird für jede Klasse, der Abschaltereignisse zugeordnet wurden, mindestens eine mit der Klasse verknüpfte mögliche Abhilfemaßnahme ausgegeben. Diese Verknüpfung ist im einfachsten Fall eine statische Liste zu der Klasse. Geeignete Maßnahmen können aber auch auf kompliziertere Weise gefunden werden, etwa mit Expertensystemen oder neuronalen Netzen.

Vorzugsweise werden nicht nur die aufgetretenen Klassen gelistet, sondern es findet zusätzlich in der Diagnoseeinheit 36 eine Priorisierung der Klassen beziehungsweise der Abhilfemaßnahmen statt. Somit stehen dem Anwender einige oder alle der folgenden Ergebnisse der Eingriffsanalyse zur Verfügung: eine Ausgabe der wahrscheinlichsten Ursache für bestimmte oder alle gespeicherten Abschaltereignisse, eine Angabe der Häufigkeit, mit der ein entsprechendes Ereignis in einem wählbaren Zeitraum aufgetreten ist, eine Angabe von Szenarien, die umgekehrt sehr wahrscheinlich nicht als Ursache in Frage kommen, und eine örtliche und zeitliche Häufung der Eingriffsbeziehungsweise Abschaltereignisse.

## Patentansprüche

1. Entfernungsmessender optoelektronischer Sicherheitssensor (10) zur Überwachung eines Überwachungsbereichs (18), wobei der Sicherheitssensor (10) einen Lichtempfänger (24) zur Erzeugung eines Empfangssignals bei Lichtempfang (20) aus dem Überwachungsbereich (18) sowie eine Auswertungseinheit (30) aufweist, die dafür ausgebildet ist, mit Hilfe des Empfangssignals Objekte in dem Überwachungsbereich (18) zu erfassen und deren Position einschließlich deren Abstand zu dem Sicherheitssensor (10) zu ermitteln und einen unzulässigen Objekteingriff in einen Schutzbereich innerhalb des Überwachungsbereichs (18) als Abschaltereignis zu erkennen und aufgrund dessen ein Absicherungssignal auszugeben,
**gekennzeichnet durch**
einen Speicher (34) zum Ablegen einer Historie mit Objekteingriffsinformationen der Abschaltereignisse und eine Diagnoseeinheit (36), die dafür ausgebildet ist, in dem Speicher (34) abgelegte Abschaltereignisse anhand der Objekteingriffsinformationen zu klassifizieren und die derart aufbereiteten Abschaltereignisse einschließlich einer Klasseninformation auszugeben sowie anhand der Klassifikation mindestens eine wahrscheinlichste Ursache für ein Abschaltereignis auszugeben.

2. Sicherheitssensor (10) nach Anspruch 1,
wobei die Objekteingriffsinformationen die Position des unzulässigen Objekteingriffs umfassen.

3. Sicherheitssensor (10) nach Anspruch 2,
wobei die Diagnoseeinheit (36) mindestens eine der folgenden Klassen von Abschaltereignissen anhand der Position unterscheidet: einen Objekteingriff in einen Randbereich des Schutzbereichs, einen Objekteingriff innerhalb des Schutzbereichs oder einen Objekteingriff im Nahbereich des Sicherheitssensors (10).

4. Sicherheitssensor (10) nach einem der vorhergehenden Ansprüche,
wobei die Objekteingriffsinformationen eine geometrische Ausdehnung eines Teilbereichs des Schutzbereichs umfassen, in den der unzulässige Objekteingriff bei dem Abschaltereignis erfolgt, und wobei insbesondere die Diagnoseeinheit (36) anhand der geometrischen Ausdehnung ein kleines Störobjekt und ein größeres Objekt als Klassen von Abschaltereignissen unterscheidet.

5. Sicherheitssensor (10) nach einem der vorhergehenden Ansprüche, wobei die Objekteingriffsinformationen eine Dauer des unzulässigen Objekteingriffs umfassen, und wobei insbesondere die Diagnoseeinheit anhand der Dauer einen kurzzeitigen Objekteingriff und einen anhaltenden Objekteingriff als Klassen von Abschaltereignissen unterscheidet.

6. Sicherheitssensor (10) nach einem der vorhergehenden Ansprüche, wobei die Objekteingriffsinformationen einen Zeitpunkt des unzulässigen Objekteingriffs umfassen.

7. Sicherheitssensor (10) nach einem der vorhergehenden Ansprüche, wobei die Objekteingriffsinformationen eine Intensität des Messwerts bei Erkennung des unzulässigen Objekteingriffs umfassen.

8. Sicherheitssensor (10) nach einem der vorhergehenden Ansprüche, wobei die Diagnoseeinheit (36) für eine statistische Auswertung der klassifizierten Abschaltereignisse ausgebildet ist, insbesondere eine Ausgabe der Häufigkeit des Auftretens, der Zeitpunkte und der Erfassungsrichtung von Abschaltereignissen nach Klassen.

9. Sicherheitssensor (10) nach einem der vorhergehenden Ansprüche, wobei die Diagnoseeinheit (36) dafür ausgebildet ist, anhand der Klassifikation mindestens eine unwahrscheinlichste Ursache für ein Abschaltereignis auszugeben.

10. Sicherheitssensor (10) nach einem der vorhergehenden Ansprüche, wobei die Diagnoseeinheit (36) dafür ausgebildet ist, ein örtliches Histogramm und/oder ein zeitliches Histogramm von unzulässigen Objekteingriffen auszugeben, insbesondere mit grafischer Darstellung.

11. Sicherheitssensor (10) nach einem der vorhergehenden Ansprüche, wobei die Diagnoseeinheit (36) dafür ausgebildet ist, das örtliche und/oder zeitliche Auftreten von Abschaltereignissen zu korrelieren.

12. Sicherheitssensor (10) nach einem der vorhergehenden Ansprüche,
wobei die Auswertungseinheit (30) dafür ausgebildet ist, Messwerte des Sensors in örtlicher und/oder zeitlicher Umgebung eines Abschaltereignisses in dem Speicher (34) abzulegen, und wobei die Diagnoseeinheit (36) dafür ausgebildet ist, die Messwerte bei der Klassifizierung einzubeziehen.

13. Sicherheitssensor (10) nach einem der vorhergehenden Ansprüche,
der eine 3D-Kamera oder ein entfernungsmessender Sicherheitslaserscanner ist.

14. Verfahren zur Überwachung eines Überwachungsbereichs (18), bei dem Licht (20) aus dem Überwachungsbereich (18) in einem Sicherheitssensor (10) in ein Empfangssignal umgewandelt wird, mit Hilfe des Empfangssignals Objekte in dem Überwachungsbereich (18) erfasst werden und deren Position einschließlich deren Abstand zu dem Sicherheitssensor (10) ermittelt wird und ein unzulässiger Objekteingriff in einen Schutzbereich innerhalb des Überwachungsbereichs (18) als Abschaltereignis erkannt und aufgrund dessen ein Absicherungssignal ausgegeben wird,
**dadurch gekennzeichnet,**
**dass** eine Historie mit Objekteingriffsinformationen der Abschaltereignisse gespeichert wird, dass die gespeicherten Abschaltereignisse anhand der Objekteingriffsinformationen klassifiziert werden und dass die derart aufbereiteten Abschaltereignisse einschließlich einer Klasseninformation sowie mindestens eine wahrscheinlichste Ursache für ein Abschaltereignis ausgegeben werden.

15. Verfahren nach Anspruch 14,
wobei ein Histogramm der unzulässigen Objekteingriffe ausgegeben wird.

## Claims

1. A distance measuring optoelectronic safety sensor (10) for monitoring a monitored area (18), wherein the safety sensor (10) comprises a light receiver (24) for generating a reception signal upon light reception (20) from the monitored area (18) as well as an evaluation unit (30) which is configured to detect objects in the monitored area (18) by means of the reception signal and to determine their position including their distance to the safety sensor (10) and to detect an inadmissible object intrusion into a protected area within the monitored area (18) as a shutdown event and to output a safety signal based thereon,
**characterized by**
a memory (34) for storing a history of object intrusion information of the shutdown events and a diagnosis unit (36) configured to classify shutdown events stored in the memory (34) based on the object intrusion information and to output the shutdown events thus processed including a class information as well as to output at least one most likely cause for a shutdown event based on the classification.

2. The safety sensor (10) according to claim 1,
wherein the object intrusion information includes the position of the inadmissible object intrusion.

3. The safety sensor (10) according to claim 2,
wherein the diagnosis unit (36) distinguishes at least one of the following classes of shutdown events based on the position: an object intrusion into a border area of the protected area, an object intrusion within the protected area, or an object intrusion in a close range of the safety sensor (10).

4. The safety sensor (10) according to any of the preceding claims,
wherein the object intrusion information includes a geometric dimension of a partial area of the protected area in which the inadmissible object intrusion occurs at a shutdown event, and wherein in particular the diagnosis unit (36) distinguishes a small interfering object and a larger interfering objects as classes of shutdown events based on the geometric dimension.

5. The safety sensor (10) according to any of the preceding claims,
wherein the object intrusion information comprises a duration of the inadmissible object intrusion, and wherein in particular the diagnosis unit (36) distinguishes a short-term object intrusion and a persistent object intrusion as classes of shutdown events based on the duration.

6. The safety sensor (10) according to any of the preceding claims,
wherein the object intrusion information includes a point in time of the inadmissible object intrusion.

7. The safety sensor (10) according to any of the preceding claims,
wherein the object intrusion information comprises an intensity of the measurement value at the detection of the inadmissible object intrusion.

8. The safety sensor (10) according to any of the preceding claims,
wherein the diagnosis unit (36) is configured for a statistic evaluation of the classified shutdown events, in particular an output of the frequency of occurrence, the points in time, and the direction of detection of the shutdown events according to classes.

9. The safety sensor (10) according to any of the preceding claims,
wherein the diagnosis unit (36) is configured to output at least one most unlikely cause for a shutdown event based on the classification.

10. The safety sensor (10) according to any of the preceding claims,
wherein the diagnosis unit (36) is configured to output a spatial histogram and/or a temporal histogram of inadmissible object intrusions, in particular with a graphical representation.

11. The safety sensor (10) according to any of the preceding claims,
wherein the diagnosis unit (36) is configure to correlate the spatial and/or temporal occurrence of shutdown events.

12. The safety sensor (10) according to any of the preceding claims,
wherein the evaluation unit (30) is configured to store measurement values of the sensor in a spatial or temporal vicinity of a shutdown event in a memory (34), and wherein the diagnosis unit (36) is configured to consider the measurement values in the classification.

13. The safety sensor (10) according to any of the preceding claims,
which is a 3D-camera or a distance measuring safety laser scanner.

14. A method for monitoring a monitored area (18), wherein light (20) from the monitored area (18) is converted into a reception signal in a safety sensor (10), objects in the monitored area (18) are detected based on the reception signal and their position including their distance to the safety sensor (10) is determined, and an inadmissible object intrusion into a protected area within the monitored area (18) is detected as a shutdown event and a safety signal is output based thereon,
**characterized in that** a history of object intrusion information of the shutdown events is stored, **in that** the stored shutdown events are classified based on the object intrusion information, and **in that** the shutdown events thus processed are output including a class information as well as at least one most likely cause for a shutdown event.

15. The method according to claim 14,
wherein a histogram of inadmissible object intrusions is output.

## Revendications

1. Capteur de sécurité optoélectronique (10) mesurant l'éloignement et destiné à la surveillance d'une zone de surveillance (18), le capteur de sécurité (10) comprenant un récepteur de lumière (24) pour engendrer un signal de réception lors de la réception de lumière (20) provenant de la zone de surveillance (18), ainsi qu'une unité d'évaluation (30) qui est réalisée pour détecter, à l'aide du signal de réception, des objets dans la zone de surveillance (18) et pour déterminer leur position, y compris leurs distances jusqu'au capteur de sécurité (10), et pour reconnaître une intervention inadmissible d'un objet dans une zone protégée à l'intérieur de la zone de surveillance (18) comme un événement de coupure et pour délivrer un signal de sécurisation en se basant sur cette reconnaissance,
**caractérisé par**
une mémoire (34) pour déposer un historique avec des informations des événements de coupure concernant des interventions d'objets, et une unité de diagnostic (36) qui est réalisée pour classifier des événements de coupure déposés dans la mémoire (34) au moyen des informations d'interventions d'objets et pour délivrer les événements de coupure ainsi conditionnés, y compris une information de classe, et pour délivrer, au moyen de la classification, au moins une cause probable pour un événement de coupure.

2. Capteur de sécurité (10) selon la revendication 1,
dans lequel les informations sur une intervention d'objet incluent la position de l'intervention de l'objet inadmissible.

3. Capteur de sécurité (10) selon la revendication 2,
dans lequel l'unité de diagnostic (36) fait une distinction de l'une au moins des classes suivantes d'événements de coupure au moyen de la position : une intervention d'un objet dans une région de bordure de la zone protégée, une intervention d'un objet à l'intérieur de la zone protégée, ou une intervention d'un objet dans la zone proche du capteur de sécurité (10).

4. Capteur de sécurité (10) selon l'une des revendications précédentes, dans lequel les informations concernant une intervention d'objet incluent une extension géométrique d'une zone partielle de la zone protégée dans laquelle l'intervention d'un objet inadmissible a lieu lors de l'événement de coupure, et dans lequel l'unité de diagnostic (36) fait en particulier une distinction, au moyen de l'extension géométrique, entre un objet perturbateur de petite taille et un objet de plus grande taille sous forme de classes d'événements de coupure.

5. Capteur de sécurité (10) selon l'une des revendications précédentes, dans lequel les informations concernant une intervention d'objet incluent une durée de l'intervention d'un objet inadmissible, et dans lequel l'unité de diagnostic fait en particulier distinction, au moyen de la durée, entre une intervention d'objet de brève durée et une intervention d'objet permanente sous forme de classes d'événements de coupure.

6. Capteur de sécurité (10) selon l'une des revendications précédentes, dans lequel les informations concernant une intervention d'objet incluent un instant de l'intervention d'un objet inadmissible.

7. Capteur de sécurité (10) selon l'une des revendications précédentes, dans lequel les informations concernant une intervention d'objet incluent une intensité de la valeur de mesure lors de la reconnaissance de l'intervention d'un objet inadmissible.

8. Capteur de sécurité (10) selon l'une des revendications précédentes, dans lequel l'unité de diagnostic (36) est réalisée pour une évaluation statistique des événements de coupure classifiés, en particulier pour une fourniture de la fréquence de l'occurrence, des instants, et de la direction de détection d'événements de coupure selon les classes.

9. Capteur de sécurité (10) selon l'une des revendications précédentes, dans lequel l'unité de diagnostic (36) est réalisée pour délivrer au moins une cause la plus improbable pour un événement de coupure au moyen de la classification.

10. Capteur de sécurité (10) selon l'une des revendications précédentes, dans lequel l'unité de diagnostic (36) est réalisée pour fournir un histogramme local et/ou un histogramme temporel d'interventions inadmissibles d'objets, en particulier avec une représentation graphique.

11. Capteur de sécurité (10) selon l'une des revendications précédentes, dans lequel l'unité de diagnostic (36) est réalisée pour mettre en corrélation des apparitions locales et/ou temporelles d'événements de coupure.

12. Capteur de sécurité (10) selon l'une des revendications précédentes, dans lequel l'unité d'évaluation (30) est réalisée pour déposer dans la mémoire des valeurs de mesure du capteur dans l'environnement local et/ou temporel d'un événement de coupure, et dans lequel l'unité de diagnostic (36) est réalisée pour utiliser les valeurs de mesure lors de la classification.

13. Capteur de sécurité (10) selon l'une des revendications précédentes, qui est une caméra en trois dimensions ou un scanner à laser de sécurité mesurant les distances.

14. Procédé pour surveiller une zone de surveillance (18), dans lequel la lumière (20) provenant de la zone de surveillance (18) est convertie dans un capteur de sécurité (10) en un signal de réception, des objets sont détectés dans la zone de surveillance (18) à l'aide du signal de réception, et leur position est déterminée, y compris leur distance par rapport au capteur de sécurité (10), et une intervention inadmissible d'un objet dans une zone protégée à l'intérieur de la zone de surveillance (18) est reconnue comme un événement de coupure, et un signal de sécurisation est délivré en se basant sur cet événement, **caractérisé en ce qu'**un historique avec des informations concernant les interventions d'objets des événements de coupure est mémorisé, **en ce que** les événements de coupure mémorisés sont classifiés au moyen des informations concernant les interventions d'objet, et **en ce que** les événements de coupure ainsi conditionnés sont délivrés, y compris une information de classe et au moins une cause la plus probable pour un événement de coupure.

15. Procédé selon la revendication 14,
dans lequel on délivre un histogramme des interventions d'objets inadmissibles.
